# EUROPÄISCHE PATENTSCHRIFT

(11) **EP 2 546 288 B1**
(45) Veröffentlichungstag und Bekanntmachung des Hinweises auf die Patenterteilung: **15.03.2017**
(21) Anmeldenummer: 12181969.2
(22) Anmeldetag: 13.10.2011
(51) Int. Cl.: C08J 3/28, H01Q 13/00, B29C 70/06, H01Q 9/40, H01Q 13/08, H01Q 1/36

(54) **Mikrowellenantenne**
Microwave antenna
Antenne à micro-ondes

(30) Priorität: 22.10.2010 DE 102010042820
(43) Veröffentlichungstag der Anmeldung: 16.01.2013
(62) Teilanmeldung aus: 11184980.8
(73) Patentinhaber: Fraunhofer-Gesellschaft zur Förderung der angewandten Forschung e.V., 80686 München (DE)
(72) Erfinder: Ress, Christian, 75045 Walzbachtal (DE); Emmerich Rudolf, 76456 Kuppenheim (DE); Graf, Matthias, 76327 Pfinztal (DE); Urban, Helfried, 75015 Bretten (DE); Bräuning, Rüdiger, 76703 Kraichtal (DE)
(74) Vertreter: Lux, Berthold

(56) Entgegenhaltungen:
- WO-A1-03/023901
- JP-A- 8 213 820
- JP-A- 2006 270 494
- JP-A- 2008 166 856
- US-A- 4 819 003

## Beschreibung

Die vorliegende Erfindung betrifft eine Mikrowellenantenne, die für ein Verfahren zur Erwärmung eines Faser-Kunststoff-Verbundwerkstoffes eingesetzt werden kann.

Kohlenstofffasern finden als Verstärkungsfasern in Hochleistungskunststoffen Verwendung. Als Matrixmaterialien werden in der Regel thermoplastische als auch duroplastische Polymere verwendet, die unter Wärmeeintrag aufgeschmolzen oder vernetzt werden. Polymere sind schlechte Wärmeleiter, so dass es lange dauert, bis die entsprechende Temperatur über Wärmeleitung oder Konvektion erreicht wird.

Mikrowellen eignen sich absorbierende Materialien unabhängig der Wärmeleitung zu erwärmen. Jedoch sind Kohlenstofffasern elektrisch leitfähig und schirmen im Allgemeinen Mikrowellen ab. Nur Kohlenstofffasern die vorwiegend uni-direktional verlaufen, können bisher mit Mikrowellen gut erwärmt werden.

Bisher gab es für dieses Problem keine spezifische Lösung. Bekannt ist Kohlenstofffaser verstärkte Kunststoffe mit Mikrowellen in einem Mikrowellenofen, sogenannter Multimode, zu erwärmen. Nachteil dieses Vorgehens ist es, dass in konventionellen Mikrowellenöfen sehr viele unterschiedliche Richtungen des elektrischen bzw. magnetischen Feldes vorhanden sind. Somit weist nur ein kleiner Teil der magnetischen Felder eine Richtung auf, die die Erwärmung des Faser-Kunststoff-Verbundwerkstoffes ermöglicht. Darüber hinaus kommt es zu Abschirmungseffekten der elektrischen bzw. magnetischen Felder was zusätzlich die Effektivität bekannter Vorrichtungen minimiert. Dadurch beobachtet man bei herkömmlichen Mikrowellenöfen eine starke Erwärmung des Randes der Faser-Kunststoff-Verbundwerkstoffe, wobei die Mitte des Bauteils relativ kalt bleibt. Dies wurde mithilfe von sogenannten thermoelektrischen Folien gemildert. Diese Folien werden auf die Faser-Kunststoff-Verbundwerkstoffe gelegt und heizen sich durch die Absorption von Mikrowellen auf und erwärmen dadurch indirekt die Struktur.

JP 8213820 beschreibt eine Glasantenne für Mobiltelefone mit einer koaxialen Einspeisung und einem kreissegmentförmigen Strahler.

WO 03/023901 beschreibt eine Antennenanordnung für Mobiltelefonbasisstationen mit einem kreissegmentförmigen Strahler.

Aufgabe ist es demnach eine Mikrowellenantenne bereitzustellen, die die oben bezeichneten Probleme beseitigt. Es ist insbesondere Aufgabe der vorliegenden Anmeldung eine Mikrowellenantenne für ein Verfahren bereitzustellen, wobei Faser-Kunststoff-Verbundwerkstoffe direkt mittels Mikrowellenenergie effektiv erwärmt werden.

Die Erfindung wird in dem unabhängigen Patentanspruch beschrieben. Vorteilhafte Ausführungsformen der Erfindung sind in den abhängigen Patentansprüchen beschrieben.

Erkenntnis ist es, dass das magnetische Feld so zur Ebene der Faserstruktur des Faser-Kunststoff-Verbundwerkstoffes ausgerichtet wird, dass ein elektrischer Strom senkrecht zur Ebene induziert wird.

Es wird ein Verfahren zur Erwärmung eines Faser-Kunststoff-Verbundwerkstoffes (FKV) umfassend mindestens eine Lage (L) aus Kohlenstofffasern (F) in einer Kunststoffmatrix (K) realisiert, wobei mittels Mikrowellenantenne (MA) ein magnetisches Feld (MF) induziert wird und die Feldrichtung des magentischen Feldes (MF) in der Ebene der Lage (L) aus Kohlenstofffasern (F) verläuft. Durch dieses Verfahren wird ein elektrischer Strom senkrecht zu den Lagen induziert.

Faser-Kunststoff-Verbundwerkstoffes (FKV) sind hinlänglich bekannt. Dabei werden Kohlenstofffasern (F) als Verstärkung in die Kunststoffmatrix (M) eingebaut.

Vorzugsweise weist ein Faser-Kunststoff-Verbundwerkstoff (FKV) mehrerer Lagen aus Kohlenstofffasern (F) auf. Die Anzahl der Lagen (L) hängt von den zu erstellenden Bauteilen ab. In der Regel weist ein Faser-Kunststoff-Verbundwerkstoff (FKV), wie zum Beispiel im Prepregs, 1 bis 200, insbesondere 10 bis 100, Lagen (L) auf. Vorzugsweise sind diese Lagen (L) parallel, insbesondere planparallel, zueinander ausgerichtet, wobei es zur Erhöhung der Steifigkeit des Faser-Kunststoff-Verbundwerkstoffes (FKV) wünschenswert ist, wenn die Lagen (L) so zueinander angelegt sind, dass die Kohlenstofffasern (F) der einzelnen Lagen (L) quer zueinander verlaufen. Darüber hinaus kann eine Lage (L) nicht nur aus parallelen Kohlenstofffasern (F) bestehen sondern aus einem Kohlenstofffasergewebe in dem Kohlenstofffasern (F) nicht nur parallel sondern auch orthogonal zueinander verlaufen. Die Dicke der einzelnen Lagen ergibt sich maßgeblich aus dem Durchmesser der Kohlenstofffasern (F).

Bezüglich der Kunststoffmatrix (K) können unterschiedlichste Polymere zum Einsatz kommen. Vorzugsweise handelt es sich um Duroplasten, Thermoplasten oder Mischungen aus Duroplasten und Thermoplasten.

Duroplasten werden vorzugsweise ausgewählt aus der Gruppe bestehend aus Epoxiden, Polyestern, Polyurethanen, und Phenole. Thermoplasten hingegen werden vorzugsweise ausgewählt aus der Gruppe der technischen Thermoplasten bestehend aus Polyamid, Polyetherketon, Polyimid, Polysulfon, Polyethersulfon und Polyester. In einer besonderen Ausführungsform umfasst die Kunststoffmatrix (K), insbesondere besteht die Kunststoffmatrix (K) aus, einem Thermoplasten, wie Polyetheretherketon Polyetherketone und/oder Polyamid.

Bei den Kohlenstofffasern (K), handelt es sich um konventionelle Kohlenstofffasern (K). Kohlenstofffasern (K) sind industriell hergestellte Fasern aus kohlenstoffhaltigen Ausgangsmaterialien, wie Cellulose, Polyacrylnitril oder Pech, die durch Pyrolyse in graphitartig angeordneten
Kohlenstoff umgewandelt werden. In vorliegender Anmeldung kommen insbesondere anisotrope Typen zum Einsatz.

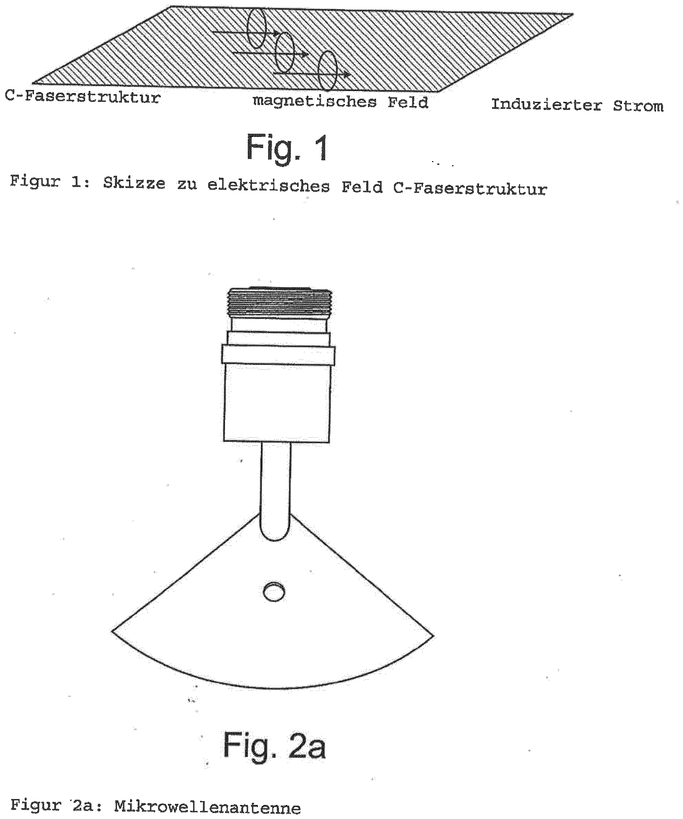

Wesentlichist es, dass für die Erwärmung eines Faser-Kunststoff-Verbundwerkstoff (FKV) ein magnetisches Feld (MF), d.h. eine magnetische Feldrichtung, erzeugt wird, das in der Ebene zumindest einer der Lagen (L) des zu erwärmenden Faser-Kunststoff-Verbundwerkstoffes (FKV) verläuft (siehe Figur 1).

Unter Erwärmung wird insbesondere verstanden, dass der Faser-Kunststoff-Verbundwerkstoff (FKV), vornehmlich die Kunststoffmatrix (K), bei Hochleistungsthermoplasten auf 500 °C, insbesondere 400 °C, und bei duroplastischen Polymeren bevorzugter Weise auf 50 bis 400 °C, wie 100 bis 250 °C, erwärmt wird.

Der Ausdruck "in der Ebene" gibt vorzugsweise wieder, dass das magnetische Feld (MF), d.h. die magnetische Feldrichtung, lateral zu den Kohlenstofffasern (K) der Lage (L), d.h. in der Ebene der Lage (L) verläuft.

Besonders bevorzugt ist, dass der Faser-Kunststoff-Verbundwerkstoff (FKV) nur einer magnetischen Feldrichtung (Feldmode) ausgesetzt ist und nicht, wie bei herkömmlichen Prozessen, mehreren magnetischen (und auch elektrischen) Feldrichtungen, die insbesondere durch Reflexionen an der Ofenwand eintreten. Folglich ist es bevorzugt, dass das Verfahren in einem (geschlossenen) System durchgeführt wird, das vornehmlich so dimensioniert wird, dass Reflexionen vernachlässigt werden können. Folglich beträgt die Höhe, Länge und Tiefe dieses System mindestens 5 λ, bevorzugt mindestens 8 λ, der eingestrahlten elektromagnetischen Welle, d.h. des magnetischen Feldes (MF). Denkbar ist auch, dass die Wände des Systems so gestaltet werden, dass eine Reflexion von magnetischen (und elektrischen) Wellen vermieden wird. Denkbare Materialien dafür sind mikrowellenabsorbierende Materialien, wie beispielsweise kohlenstoffhaltige Polymere, wasserhaltige Materialien etc.

Der Vorteil des ausgerichteten magnetischen Feldes (MF) ist es, dass ausschließlich ein elektrischer Strom (ES) orthogonal zur Ebene der Lage (L) aus Kohlenstofffasern (F) verläuft und damit in das Innere des Faser-Kunststoff-Verbundwerkstoffes (FKV).

Besonders günstig hat es sich erwiesen, dass die Mikrowellenantenne (MA) nahe an den zu erwärmenden Faser-Kunststoff-Verbundwerkstoff (FKV) herangeführt wird. Folglich ist es bevorzugt, dass die Mikrowellenantenne (MA) während des Erwärmens 50 mm oder weniger (z.B. 0.5 bis 50 mm), insbesondere 10 mm oder weniger(z.B. 0.5 bis 10 mm), wie 1 bis 10 mm, oberhalb des Faser-Kunststoff-Verbundwerkstoffes (FKV) platziert wird.

Durch die Nähe der Mikrowellenantenne (MA) zum Faser-Kunststoff-Verbundwerkstoff (FKV) bilden unter elektrodynamischen Gesichtspunkten die Mikrowellenantenne (MA) und zumindest eine Lage (L) aus Kohlenstofffasern (F) ein gemeinsames System, das auch so betrachtet werden muss, d.h. die Kohlenstofffaserstruktur beeinflusst ganz entscheidend die Feldausrichtung.

Das magnetische Feld (MF) der Mikrowelle hat vorzugsweise eine Freiraumwellenlänge λ von 0,1 cm bis 100,0 cm, vorzugsweise von 3,0 cm bis 30,0 cm.

Es hat sich herausgestellt, dass das oben beschriebene Verfahren insbesondere mit einer neuartigen Mikrowellenantenne (MA) durchgeführt werden kann.

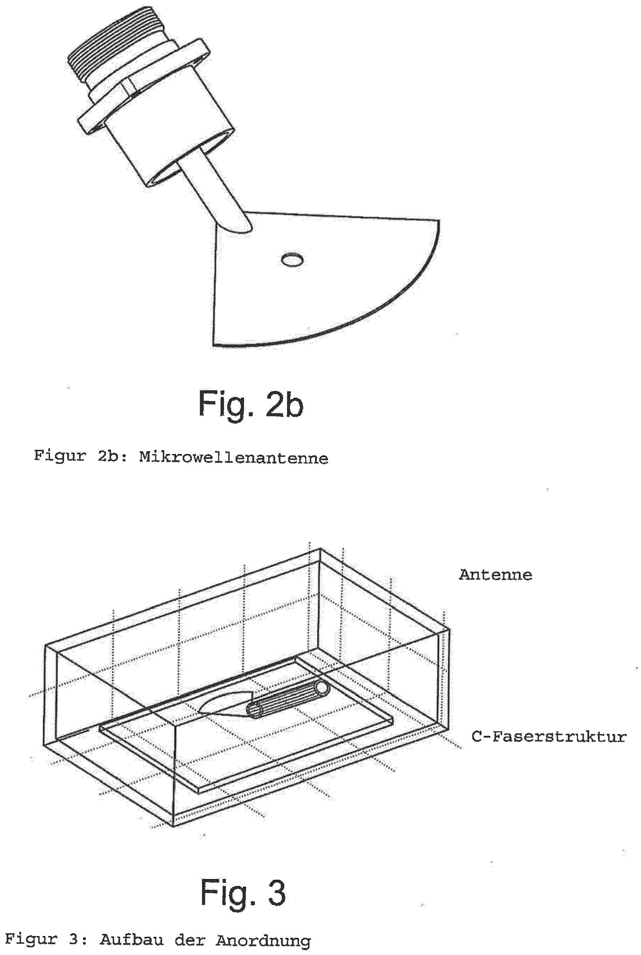

Diese Mikrowellenantenne (MA) umfasst einen Schaft (S) und eine ebene Metallfläche (MF), wobei
(a) der Schaft (S) einen Innenleiter (IL) und einen Außenleiter (AL) umfasst, wobei der Innenleiter (IL) und der Außenleiter (AL) durch ein Dielektrikum (D) getrennt sind und Innenleiter (IL) und Außenleiter (AL) koaxial zueinander verlaufen,
(b) die Metallfläche (MF) die Form eines Kreissektors (KS) mit einem Winkel von 1° bis 180° und einem Radius von 0,1 cm bis 60,0 cm aufweist,
(c) ein Ende des Innenleiters (IL) mit der Spitzes der Metallfläche (MF) verbunden ist, die dem Winkel von 1° bis 180° zuzuordnen ist, wobei der Innenleiter (IL) mit der Ebene der Metallfläche (MF) einen Winkel zwischen 0° und 180° bildet (siehe Figuren 2a, 2b, 3a und 3b).

Zum genaueren Verständnis der Mikrowellenantenne (MA) in ihrer bevorzugten Ausführungsformen wird ausdrücklich auf die Figuren 2a, 2b, 3a und 3b verwiesen.

Vorzugsweise ist der Schaft (S) rund mit einem Durchmesser von 10 bis 150 mm, vorzugsweise von 20 bis 60 nm, insbesondere von 25 bis 35 mm, wie 32 mm. Die Länge des Schaftes (S) beträgt in einer bevorzugten Ausführungsform mindestens 30 mm.

Der Innenleiter (IL) hat vorzugsweise einen Durchmesser von 2 mm bis 60 mm, insbesondere 2 mm bis 20 mm, wie 5 mm bis 10 mm, insbesondere bevorzugt 8 mm.

Das Dielektrikum (D) ist vorzugsweise Luft.

Besonders gute Ergebnisse werden erzielt, wenn das Schaftende, welches mit der Metallfläche (MF) verbunden ist, nur den Innenleiter (IL) aufweist. Die Länge des Schaftabschnittes, welcher nur den Innenleiter (IL) aufweist, ergibt sich aus der zu erzeugenden elektromagnetischen Welle. Folglich ist es bevorzugt, dass der Schaft (S) λ/2 bis λ/6, insbesondere λ/3 bis λ/5, wie λ/4, vor dem Schaftende, welches mit der Metallfläche (MF) verbunden ist, nur den Innenleiter (IL) aufweist, wobei "λ" die Wellenlänge der Mikrowelle mit einer Länge von 0,1 cm bis 100 cm, vorzugsweise von 3,0 cm bis 30,0 cm, ist. Demnach ist es bevorzugt, dass der Schaft (S) 0,1 cm bis 25,0 cm, insbesondere 0,5 bis 15,0 cm, vor dem Schaftende, welches mit der Metallfläche (MF) verbunden ist, nur den Innenleiter (IL) aufweist.

Das zweite wesentliche Strukturmerkmal der Mikrowellenantenne (MA) ist die ebene Metallfläche (MF). Diese ebene Metallfläche (MF) weist vorzugsweise die Form eines Kreissektors (KS) mit
(a) einem Winkel von 1° bis 180°, vorzugsweise von 70° bis 120°, insbesondere von 80° bis 100°, wie 90°
   und/oder
(b) einem Radius von 0,1 cm bis 60,0 cm, vorzugsweise von 0,2 cm bis 60,0 cm, insbesondere von 1,0 cm bis 20,0 cm auf.

Der Radius ergibt sich vorzugsweise aus der Wellenlänge der Mikrowelle. Folglich ist es bevorzugt, dass die Metallfläche (MF) in Form eines Kreissektors (KS) einen Radius von λ/1,8 bis λ/2,2, vorzugsweise von λ/1,9 bis λ/2, wie λ/2,0, hat.

Eine bevorzugte Ausführungsform der Mikrowellenantenne (MA) ist dadurch gekennzeichnet, dass
(a) der Radius λ/1,8 bis λ/2,2 ist
   und/oder
(b) der Schaft (S) λ/2 bis λ/6 vor dem Schaftende, welches mit der Metallfläche (MF) verbunden ist, nur den Innenleiter (IL) aufweist,
wobei "λ" die Wellenlänge der Mikrowelle mit einer Länge von 0,1 cm bis 100 cm ist.

In einer besonderen Ausführungsform weist die ebene Metallfläche (MF) ein kreisförmiges Loch auf. Dieses Loch hat vorzugsweise einen Durchmesser von 1 bis 20 mm, wie von 5 bis 10 mm.

Das kreisförmige Loch befindet sich vorzugsweise in der Mitte des Kreissektors.

Die Dicke der ebenen Metallfläche (MF) liegt vorzugsweise im Bereich vom 0,1 bis 10 mm, wie 0,2 bis 2 mm.

In einer bevorzugten Ausführungsform umfasst, insbesondere besteht, die Metallfläche aus leitfähigen Materialien wie Metall (Kupfer, Aluminium, Messing, Edelstahl) oder Graphit.

Weiterhin muss das eine Ende des Innenleiters (IL) mit der Spitze (Scheitelpunkt) der Metallfläche (MF) verbunden sein. D.h. das eine Ende des Innenleiters (IL) ist mit der Spitze der Metallfläche (MF) verbunden, die dem Winkel von 1° bis 180° zuzuordnen ist. Dabei ist der Innenleiter (und damit der Schaft) vorzugsweise fest mit der Metallfläche (MF) verbunden. Vorzugsweise beschreibt der Innenleiter (IL) mit der Ebene der Metallfläche (MF) einen Winkel zwischen 0° und 180°, vorzugsweise zwischen 10° und 90°, insbesondere zwischen 25° und 55°. In einer besonderen Ausführungsform beträgt der Winkel zwischen 30° bis 40°.

Das beschriebene Verfahren umfasst die Erwärmung von jeglichen Kunststoff, insbesondere duro- und/oder thermoplastischen Polymeren, die mit Kohlenstofffasern verstärkt sind, und alle damit verbundenen Prozesse. So kann auch die konventionelle Autoclave-Technologie mit solch einem Verfahren und solch einer Mikrowellenantenne (MA) betrieben werden, um in kurzer Zeit und energieeffizient die Struktur zu heizen. Das beschriebene Verfahren und die Mikrowellenantenne (MA) sind insbesondere einsetzbar bei sogenannten Tapelegeprozessen. Bei diesen Prozessen kann das beschriebene Verfahren und/oder die Mikrowellenantenne genutzt werden, um direkt nach Ablegen des Tapes das Polymer zu erwärmen und/oder auszuhärten. Des Weiteren kann das Verfahren und/oder die Mikrowellenantenne (MA) eingesetzt
werden um die gesamte Kohlenstofffaser verstärkte Struktur nach dem Legen komplett zu konsolidieren.

Basierend auf den vorstehenden Ausführungen ist die folgende Mikrowellenantenne und das folgende Verfahren beschrieben:
[Paragraph 1] Verfahren zur Erwärmung eines Faser-Kunststoff-Verbundwerkstoffes (FKV) umfassend mindestens eine Lage (L) aus Kohlenstofffasern (F) in einer Kunststoffmatrix (K) wobei mittels Mikrowellenantenne (MA) ein magnetisches Feld (MF) induziert wird und die Feldrichtung des magnetischen Feldes (MF) in der Ebene der Lage (L) aus Kohlenstofffasern (F) verläuft.
**[Paragraph 2]** Verfahren nach [Paragraph 1], dadurch gekennzeichnet, dass nur eine magnetische Feldrichtung während der Erwärmung des Faser-Kunststoff-Verbundwerkstoffes (FKV) vorliegt und diese in der Ebene der Lage (L) aus Kohlenstofffasern (F) verläuft.
**[Paragraph 3]** Verfahren nach [Paragraph 1] oder [Paragraph 2], dadurch gekennzeichnet, dass der induzierte elektrische Strom (ES) orthogonal zur Ebene der Lage (L) aus Kohlenstofffasern (F) verläuft.
**[Paragraph 4]** Verfahren nach einem der vorhergehenden Paragraphen [Paragraph 1] bis [Paragraph 3], dadurch gekennzeichnet, dass die Kunststoffmatrix (K) ein Duroplast und/oder ein Thermoplast ist/sind.
**[Paragraph 5]** Verfahren nach einem der vorhergehenden Paragraphen [Paragraph 1] bis [Paragraph 4], dadurch gekennzeichnet, dass die Mikrowellenantenne (MA) eine Mikrowellenantenne nach einen der Ansprüche 7 bis 10 ist.
**[Paragraph 6]** Verfahren nach einem der vorhergehenden Paragraphen [Paragraph 1] bis [Paragraph 5], dadurch gekennzeichnet, dass die Mikrowellenantenne (MA) 50 mm oder weniger oberhalb des Faser-Kunststoff-Verbundwerkstoffes (FKV) platziert wird.
**[Paragraph 7]** Mikrowellenantenne (MA) umfassend einen Schaft (S) und eine ebene Metallfläche (MF), wobei
   (a) der Schaft (S) einen Innenleiter (IL) und einen Außenleiter (AL) umfasst, wobei der Innenleiter (IL) und der Außenleiter (AL) durch ein Dielektrikum (D) getrennt sind und Innenleiter (IL) und Außenleiter (AL) koaxial zueinander verlaufen,
   (b) die Metallfläche (MF) die Form eines Kreissektors (KS) mit einem Winkel von 1° bis 180° und einem Radius von 1 cm bis 60,0 cm aufweist,
   (c) ein Ende des Innenleiters (IL) mit der Spitze der Metallfläche (MF) verbunden ist, die dem Winkel von 1° bis 180° zuzuordnen ist, wobei der Innenleiter (IL) mit der Ebene der Metallfläche (MF) einen Winkel zwischen 0° und 180° bildet.
**[Paragraph 8]** Mikrowellenantenne (MA) nach [Paragraph 7], dadurch gekennzeichnet, dass der Schaft (S) 0,1 cm bis 25,0 cm vor dem Schaftende, welches mit der Metallfläche (MF) verbunden ist, nur den Innenleiter (IL) aufweist.
**[Paragraph 9]** Mikrowellenantenne (MA) nach [Paragraph 7] oder [Paragraph 8], dadurch gekennzeichnet, dass die Metallfläche (MF) ein elektrisch leitfähiges Material, vorzugsweise Kupfer, Messing, Bronze, Aluminium, und/oder Edelstahl, umfasst.
**[Paragraph 10]** Mikrowellenantenne (MA) nach einem der vorhergehenden Paragraphen [Paragraph 7] bis [Paragraph 9], dadurch gekennzeichnet, dass
   (a) der Radius λ/1,8 bis λ/2,2 ist
      und/oder
   (b) der Schaft (S) λ/2 bis λ/6 vor dem Schaftende, welches mit der Metallfläche (MF) verbunden ist, nur den Innenleiter (IL) aufweist,
   wobei "λ" die Wellenlänge der Mikrowelle mit einer Länge von 0,1 cm bis 100 cm ist.

### BEISPIELE

Es wurden Versuche zur Erwärmung von Kohlenstofffaserstrukturen mit Polyetheretherketon Matrix (PEEK) durchgeführt. Der Faser-Kunststoff-Verbundwerkstoff enthielt 32 Lagen unidirektionaler Kohlenstofffaserstrukturen in beliebiger Orientierung geschichtet. Er wurde mit der in Figuren 2a und 2b abgebildeten Antenne (ausgelegt für 2,45 GHz, d.h. einer Wellenlänge von etwa 12cm) auf eine Temperatur von 400°C erwärmt. Dazu war eine Leistung von etwa 400 W und eine Bestrahlungszeit von wenigen Sekunden (<5s) notwendig. Der Abstand Antenne mit Kohlenstofffaserstruktur betrug während der Erwärmung 5 mm. (siehe Figur 3)

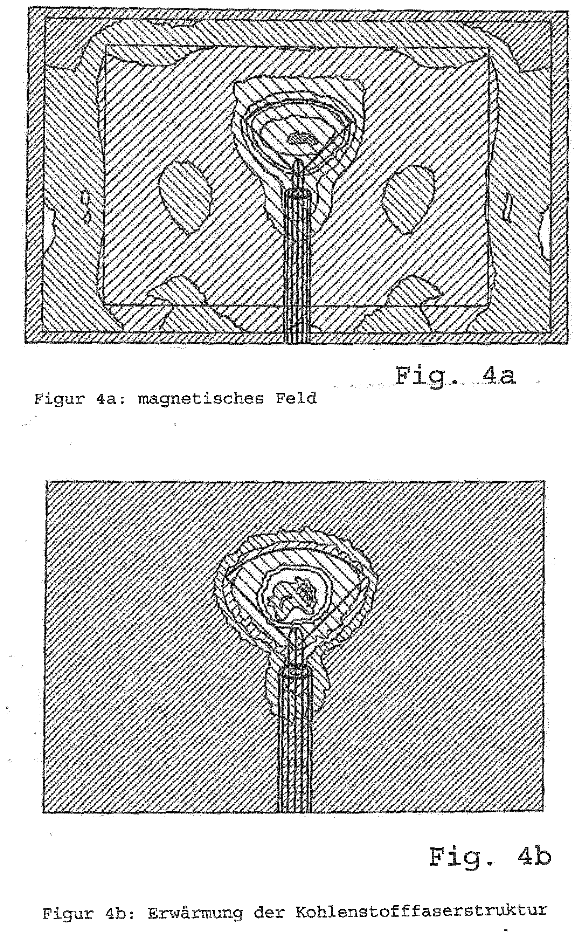

Die Figur 4a zeigt das auftretende magnetische Feld und Figur 4b die daraus folgende ohmsche Erwärmung. Beide Figuren stimmen sehr gut überein, d.h. Bereiche hoher magnetischer Feldstärke ergeben eine starke Erwärmung.

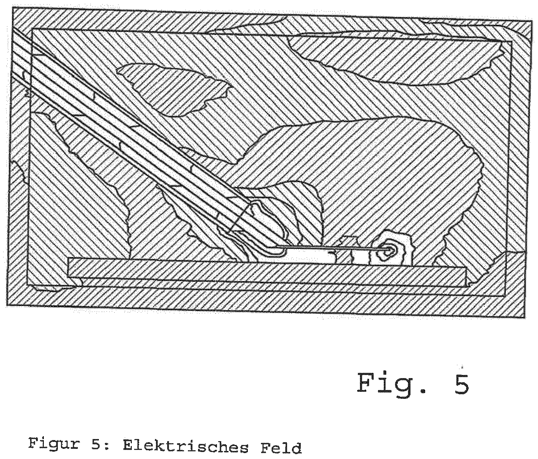

Figur 5 zeigt das dazugehörige elektrische Feld. Das elektrische Feld ist am höchsten beim Übergang koaxiale Zuleitung Metallfläche und sehr klein in dem Bereich in dem die Kohlenstofffaserstruktur erwärmt wird, d.h. das magnetische und nicht das elektrische Feld heizt die Kohlenstofffaserstruktur und damit den gesamten Faser-Kunststoff-Verbundwerkstoff auf.

## Patentansprüche

1. Mikrowellenantenne (MA) umfassend einen Schaft (S) und eine ebene Metallfläche (MF), wobei
(a) der Schaft (S) einen Innenleiter (IL) und einen Außenleiter (AL) umfasst, wobei der Innenleiter (IL) und der Außenleiter (AL) durch ein Dielektrikum (D) getrennt sind und Innenleiter (IL) und Außenleiter (AL) koaxial zueinander verlaufen,
(b) die Metallfläche (MF) die Form eines Kreissektors (KS) mit einem Winkel von 1° bis 180° und einem Radius von 0,1 cm bis 60,0 cm aufweist,
(c) ein Ende des Innenleiters (IL) mit der Spitze der Metallfläche (MF) verbunden ist, die dem Winkel von 1° bis 180° zuzuordnen ist, wobei der Innenleiter (IL) mit der Ebene der Metallfläche (MF) einen Winkel zwischen 0° und 180° bildet,
**dadurch gekennzeichnet, dass**
(i) der Radius λ/1,8 bis λ/2,2 ist
und
(ii) der Schaft (S) λ/2 bis λ/6 vor dem Schaftende, welches mit der Metallfläche (MF) verbunden ist, nur den Innenleiter (IL) aufweist,
wobei "λ" die Wellenlänge der Mikrowelle mit einer Länge von 0,1 cm bis 100 cm ist.

2. Mikrowellenantenne (MA) nach Anspruch 1, **dadurch gekennzeichnet, dass** der Schaft (S) rund mit einem Durchmesser von 10 bis 150 mm ist.

3. Mikrowellenantenne (MA) nach einem der vorhergehenden Ansprüche, **dadurch gekennzeichnet, dass** der Innenleiter (IL) einen Durchmesser von 2 mm bis 60 mm aufweist.

4. Mikrowellenantenne (MA) nach einem der vorhergehenden Ansprüche, **dadurch gekennzeichnet, dass** das Dielektrikum (D) Luft ist.

5. Mikrowellenantenne (MA) nach einem der vorhergehenden Ansprüche, **dadurch gekennzeichnet, dass** das Schaftende, welches mit der Metallfläche (MF) verbunden ist, nur den Innenleiter (IL) aufweist.

6. Mikrowellenantenne (MA) nach einem der vorhergehenden Ansprüche, **dadurch gekennzeichnet, dass** der Schaft (S) 0,1 cm bis 25,0 cm vor dem Schaftende, welches mit der Metallfläche (MF) verbunden ist, nur den Innenleiter (IL) aufweist.

7. Mikrowellenantenne (MA) nach einem der vorhergehenden Ansprüche, **dadurch gekennzeichnet, dass** die ebene Metallfläche (MF) die Form eines Kreissektors (KS) aufweist mit
(a) einem Winkel von 70° bis 120°, vorzugsweise von 80° bis 100°, wie 90°
und/oder
(b) einem Radius von 0,2 cm bis 60,0 cm, vorzugsweise von 1,0 cm bis 20,0 cm.

8. Mikrowellenantenne (MA) nach einem der vorhergehenden Ansprüche, **dadurch gekennzeichnet, dass** die ebene Metallfläche (MF) ein kreisförmiges Loch aufweist.

9. Mikrowellenantenne (MA) nach dem vorhergehenden Anspruch, **dadurch gekennzeichnet, dass** das kreisförmige Loch einen Durchmesser von 1 bis 20 mm, insbesondere 5 bis 10 mm aufweist.

10. Mikrowellenantenne (MA) nach einem der Ansprüche 8 oder 9, **dadurch gekennzeichnet, dass** das kreisförmige Loch in der Mitte des Kreissektors (KS) ist.

11. Mikrowellenantenne (MA) nach einem der vorhergehenden Ansprüche, **dadurch gekennzeichnet, dass** die Metallfläche (MF) ein elektrisch leitfähiges Material, vorzugsweise Kupfer, Messing, Bronze, Aluminium, und/oder Edelstahl, umfasst.

12. Mikrowellenantenne (MA) nach einem der vorhergehenden Ansprüche, **dadurch gekennzeichnet, dass** der Innenleiter (IL) fest mit der Metallfläche (MF) verbunden ist.

13. Mikrowellenantenne (MA) gemäß einem der vorhergehenden Ansprüche, **dadurch gekennzeichnet, dass** der Innenleiter (IL) mit der Ebene der Metallfläche (MF) einen Winkel zwischen 0° und 180°, vorzugsweise zwischen 10° und 90°, insbesondere zwischen 25° und 55°, besonders bevorzugt zwischen 30° und 40°, aufweist.

14. Mikrowellenantenne (MA) gemäß einem der vorhergehenden Ansprüche, **dadurch gekennzeichnet, dass** die Dicke der Metallfläche (MF) im Bereich von 0,1 bis 10 mm liegt.

## Claims

1. Microwave antenna (MA) comprising a shaft (S) and a planar metal face (MF), wherein
(a) the shaft (S) comprises an internal conductor (IL) and an external conductor (AL), wherein the internal conductor (IL) and the external conductor (AL) are separated by a dielectric (D), and the internal conductor (IL) and the external conductor (AL) run so as to be mutually coaxial;
(b) the metal face (MF) has the shape of a circle sector (KS) having an angle of 1° to 180° and a radius of 0.1 cm to 60.0 cm;
(c) one end of the internal conductor (IL) is connected to the tip of the metal face (MF) that is to be assigned to the angle of 1° to 180°, wherein the internal conductor (IL) forms an angle between 0° and 180° with the plane of the metal face (MF);
**characterized in that**
(i) the radius is λ/1.8 to λ/2.2;
and
(ii) the shaft (S)λ/2 to λ/6 ahead of the shaft end that is connected to the metal face (MF) only has the internal conductor (IL),
wherein "λ" is the wavelength of the microwave, having a length of 0.1 cm to 100 cm.

2. Microwave antenna (MA) according to Claim 1, **characterized in that** the shaft (S) is round, having a diameter of 10 to 150 mm.

3. Microwave antenna (MA) according to one of the preceding claims, **characterized in that** the internal conductor (IL) has a diameter of 2 mm to 60 mm.

4. Microwave antenna (MA) according to one of the preceding claims, **characterized in that** the dielectric (D) is air.

5. Microwave antenna (MA) according to one of the preceding claims, **characterized in that** the shaft end that is connected to the metal face (MF) has only the internal conductor (IL).

6. Microwave antenna (MA) according to one of the preceding claims, **characterized in that** the shaft (S) 0.1 cm to 25.0 cm ahead of the shaft end that is connected to the metal face (MF) has only the internal conductor (IL).

7. Microwave antenna (MA) according to one of the preceding claims, **characterized in that** the planar metal face (MF) has the shape of a circle sector (KS) having
(a) an angle of 70° to 120°, preferably of 80° to 100°, such as 90°,
and/or
(b) a radius of 0.2 cm to 60 cm, preferably of 1.0 cm to 20.0 cm.

8. Microwave antenna (MA) according to one of the preceding claims, **characterized in that** the planar metal face (MF) has a circular bore.

9. Microwave antenna (MA) according to the preceding claim, **characterized in that** the circular bore has a diameter of 1 to 20 mm, in particular 5 to 10 mm.

10. Microwave antenna (MA) according to one of Claims 8 or 9, **characterized in that** the circular bore is in the centre of the circle sector (KS).

11. Microwave antenna (MA) according to one of the preceding claims, **characterized in that** the metal face (MF) comprises an electrically conductive material, preferably copper, brass, bronze, aluminium, and/or stainless steel.

12. Microwave antenna (MA) according to one of the preceding claims, **characterized in that** the internal conductor (IL) is fixedly connected to the metal face (MF).

13. Microwave antenna (MA) according to one of the preceding claims, **characterized in that** the internal conductor (IL) forms an angle between 0° and 180°, preferably between 10° and 90°, in particular between 25° and 55°, particularly preferably between 30° and 40° with the plane of the metal face (MF).

14. Microwave antenna (MA) according to one of the preceding claims, **characterized in that** the thickness of the metal face (MF) is in the range from 0.1 to 10 mm.

## Revendications

1. Antenne à hyperfréquences (MA), comprenant une tige (S) et une surface métallique (MF),
(a) la tige (S) comprenant un conducteur interne (IL) et un conducteur externe (AL), le conducteur interne (IL) et le conducteur externe (AL) étant séparés par un diélectrique (D) et le conducteur interne (IL) et le conducteur externe (AL) s'étendant de manière coaxiale l'un par rapport à l'autre,
(b) la surface métallique (MF) possédant la forme d'un secteur de cercle (KS) avec un angle de 1° à 180° et un rayon de 0,1 cm à 60,0 cm,
(c) une extrémité du conducteur interne (IL) étant reliée avec la pointe de la surface métallique (MF) qui est associée à l'angle de 1° à 180°, le conducteur interne (IL) formant avec le plan de la surface métallique (MF) un angle compris entre 0° et 180°,
**caractérisée en ce que**
(i) le rayon est de λ/1,8 à λ/2,2
et
(ii) la tige (S), de λ/2 à λ/6 devant l'extrémité de la tige qui est reliée avec la surface métallique (MF), ne possède que le conducteur interne (IL),
« λ » désignant la longueur d'onde des hyperfréquences, avec une longueur de 0,1 cm à 100 cm.

2. Antenne à hyperfréquences (MA) selon la revendication 1, **caractérisée en ce que** la tige (S) est ronde avec un diamètre de 10 à 150 mm.

3. Antenne à hyperfréquences (MA) selon l'une des revendications précédentes, **caractérisée en ce que** le conducteur interne (IL) possède un diamètre de 2 mm à 60 mm.

4. Antenne à hyperfréquences (MA) selon l'une des revendications précédentes, **caractérisée en ce que** le diélectrique (D) est de l'air.

5. Antenne à hyperfréquences (MA) selon l'une des revendications précédentes, **caractérisée en ce que** l'extrémité de la tige qui est reliée avec la surface métallique (MF) ne possède que le conducteur interne (IL).

6. Antenne à hyperfréquences (MA) selon l'une des revendications précédentes, **caractérisée en ce que** la tige (S), de 0,1 cm à 25,0 cm devant l'extrémité de la tige qui est reliée avec la surface métallique (MF), ne possède que le conducteur interne (IL).

7. Antenne à hyperfréquences (MA) selon l'une des revendications précédentes, **caractérisée en ce que** la surface métallique (MF) plane possède la forme d'un secteur de cercle (KS), avec
(a) un angle de 70° à 120°, de préférence de 80° à 100°, comme 90°
et/ou
(b) un rayon de 0,2 cm à 60,0 cm, de préférence de 1,0 cm à 20,0 cm.

8. Antenne à hyperfréquences (MA) selon l'une des revendications précédentes, **caractérisée en ce que** la surface métallique (MF) plane possède un trou circulaire.

9. Antenne à hyperfréquences (MA) selon l'une des revendications précédentes, **caractérisée en ce que** le trou circulaire possède un diamètre de 1 à 20 mm, notamment de 5 à 10 mm.

10. Antenne à hyperfréquences (MA) selon l'une des revendications 8 ou 9, **caractérisée en ce que** le trou circulaire se trouve au centre du secteur de cercle (KS).

11. Antenne à hyperfréquences (MA) selon l'une des revendications précédentes, **caractérisée en ce que** la surface métallique (MF) comprend un matériau électriquement conducteur, de préférence du cuivre, du laiton, du bronze, de l'aluminium et/ou de l'acier inoxydable.

12. Antenne à hyperfréquences (MA) selon l'une des revendications précédentes, **caractérisée en ce que** le conducteur interne (IL) est relié à demeure avec la surface métallique (MF).

13. Antenne à hyperfréquences (MA) selon l'une des revendications précédentes, **caractérisée en ce que** le conducteur interne (IL) forme avec le plan de la surface métallique (MF) un angle compris entre 0° et 180°, de préférence entre 10° et 90°, notamment entre 25° et 55°, particulièrement de préférence entre 30° et 40°.

14. Antenne à hyperfréquences (MA) selon l'une des revendications précédentes, **caractérisée en ce que** l'épaisseur de la surface métallique (MF) se situe dans la plage de 0,1 à 10 mm.
